# EUROPEAN PATENT SPECIFICATION

(11) **EP 3 710 618 B1**
(45) Date of publication and mention of the grant of the patent: **13.09.2023**
(21) Application number: 18839889.5
(22) Date of filing: 12.11.2018
(51) Int. Cl.: C25B 1/02, C25B 9/70, C25B 15/023, H01M 16/00, C25B 9/19, C25B 1/04, C25B 1/50

(54) **MULTI-TRIGGERED ELECTRODES IN ELECTROCHEMICAL SYSTEMS**
MEHRFACHAUSGELÖSTE ELEKTRODEN IN ELEKTROCHEMISCHEN SYSTEMEN
ÉLECTRODES MULTI-DÉCLENCHÉES DANS DES SYSTÈMES ÉLECTROCHIMIQUES

(30) Priority: 14.11.2017 NL 2019908
(43) Date of publication of application: 23.09.2020
(73) Proprietor: Battolyser Holding B.V., 3115 JD Schiedam (NL)
(72) Inventor: WENINGER, Bernhard, 2600 AA Delft (NL)
(74) Representative: Ellens, Andries
(86) International application number: PCT/NL2018/050749
(87) International publication number: WO 2019/098824

(56) References cited:
- EP-A1- 2 781 624
- WO-A1-2015/065957
- WO-A1-2016/178564
- US-A1- 2006 088 739
- F. M. MULDER ET AL: "Efficient electricity storage with a battolyser, an integrated Ni-Fe battery and electrolyser", ENERGY & ENVIRONMENTAL SCIENCE, vol. 10, no. 3, 14 December 2016 (2016-12-14), pages 756-764, XP055402364, Cambridge ISSN: 1754-5692, DOI: 10.1039/C6EE02923J & F. M Mulder ET AL: "Efficient electricity storage with a battolyser, an integrated Ni-Fe battery and electrolyserElectronic supplementary information (ESI) available. See DOI: 10.1039/c6ee02923j", , 15 March 2017 (2017-03-15), pages 756-764, XP055487520, DOI: 10.1039/c6ee02923j Retrieved from the Internet: URL:https://epo.summon.serialssolutions.co m/2.0.0/link/0/eLvHCXMwjV1LT8MwDLYGJzjwRry GfNgBJAJrm6YZN1TaMYFA2nbhNHltDkPTQKUg7U_xG 3HadYBgEpdIkeNGqVN_ebifARpeStpaVjB6p0KSqwU FjitIDRUrBFoWhzmPoey3g25b3tWgseAG32tdJMqYp svrkCd2tJ707dcXqtvK3Sq3WRDqMQxK4auWW3GQ_lB l5MiqjB4FcsTr_-tzA9ZmK0O8Kk25CTUz2YLVb3yB2 _ARFYQPjBN [re

## Description

### FIELD OF THE INVENTION

The present invention is in the field of an electrochemical hydrogen storage system for forming a chemical fuel, such as by electrolysis of water thereby forming hydrogen, and for storing electricity, such as during daylight, and for delivering electricity and/or hydrogen during night, as well as to a method of operating said electrochemical hydrogen and/or oxygen storage system, a battery with cells of the system, and a chemical production unit.

### BACKGROUND OF THE INVENTION

The present invention is in the field of an electrochemical hydrogen storage system for forming a chemical fuel, such as by electrolysis of water thereby forming hydrogen. Alternative approaches relate to forming hydrogen also a hydrocarbon, syngas, ammonia, urea, and an alcohol may be formed. Based on readily available fluids these chemical fuels can be produced. A source for e.g. the electrolysis may be solar radiation.

Electrolysis of a species as water relates to decomposition of the species (water) into its constituents (oxygen and hydrogen) by providing an electric current through said species. Thereto the species is typically in fluid form. In case of water an objective is to produce hydrogen. Electrolysis can be used to skim off excess power, such as from wind energy.

It is noted that at this point in time production of hydrogen from water is considered not competitive. There are various production methods, such as steam reforming, production of hydrogen from hydrocarbons, biological production, various forms of electrolysis, photo electrochemical water splitting, by concentrating solar energy, catalytic production, etc.

A good example of a suitable electrochemical storage cell is given in WO2016/178564 A1 of the present applicant.

However, standard assemblies in electrochemistry typically consist of a working electrode, a counter electrode, a sense electrode and a reference electrode. Advanced equipment for electrochemical research comprises bipotentiostat and multichannel potentiostats. Bipotentiostats are commonly used in rotating disk setups and possess a second working electrode which can be set to a voltage offset with respect to the sense or reference electrode allowing for the detection of reaction intermediates at low currents. Multichannel systems allow for testing multiple working electrodes versus a common counter electrode or for testing multiple electrode pairs within one electrochemical system. However, these configurations cannot be assembled to multi-cell arrays.

The present invention therefore relates to an improved electrochemical storage system for generating chemical fuels, which solve one or more of the above problems and drawbacks of the prior art, providing reliable results, without jeopardizing functionality and advantages.

### SUMMARY OF THE INVENTION

The present invention relates to an electrochemical storage system for forming a chemical fuel, and for storing electricity, and a method of operating said electrochemical hydrogen storage system, a battery with cells of the system, and a chemical production unit. The present system can be used for storage (and generation) of hydrogen of oxygen, and both hydrogen and oxygen. The present system provides various advantages. The present system is balancing redundant. In an exemplary embodiment it typically has at least one proton and at least one hydroxyl storage electrode, wherein at least one electrode is for hydrogen production and at least one electrode is for oxygen production. In an exemplary embodiment wherein one electrode is capable of battery functionality and electrolysis functionality one can reduce the system; this works only with the present electrodes which have shown double functionality. Overall the H₂ and O₂ production is preferably stoichiometric. The electrode assembly may be arranged in a way to benefit from convection caused by gas production to decrease diffusive losses. The multi-dimensional ion-flow inside the structure can to be optimised to reduce over-potentials. The concept of multi-triggered electrodes can be applied in electrochemical systems. The control system for multi-triggered electrodes can be applied in multi-cell bipolar arrangement with just one control-unit to control all HEE (resp. OEE) electrodes, such as with an isolated connection using a AC transformer (with a controllable and preferably fixed current ratio under ideal conditions) together with a AC/DC converter (with a controllable and preferably defined current ratio). The control units for all HEE (resp. OEE) can be connected in series. Therefore all HEE and OEE can be triggered by the same AC current which leads to a defined i_{HE} (resp. i_{OE}) for all connected electrodes. The storage electrodes are typically not limited to one set of gas production electrodes. There may be multiple subsets of gas production electrodes, as in addition to controlled O₂ and H₂ production it might be beneficial to locate extra gas production electrodes at suitable locations inside the storage electrodes to generate a convective flow inside the electrodes to reduce diffusive losses. Typically all electrodes in one compartment are isolated from one and another. A complete and independent control of H₂ and O₂ production is possible as well as to decouple the electrolysis process typically involved. Also a postponed electrolysis may be provided. Actually, most of the work required for electrolysis is required when electricity is abundant. Through the concept of storing and releasing the hydrogen/oxygen at a later moment less electrical storage capacity is required (decrease by 80% compared to independent battery and electrolyser operation. This concept is demonstrated using ammonia production. The multi-triggered electrodes-concept can be expanded, such as to batteries (only storage electrodes, e.g. Li/Na cathodes and anodes; only fuel cells electrodes and other electrochemical systems. With the present storage system it is possible to decouple oxygen and hydrogen production and to store protons and hydroxyl ions in storage electrodes. Both gasses can be released on demand in a controlled way. The concept of multi-triggered electrodes can be applied in various other electrochemistry applications. Examples are large battery stacks with multiple electrodes adjacent to one and another and fuel cell systems with controlled reaction rates at different locations of the surface. Also electro-chemical CO₂ reduction with controllable electrodes with different selectivity is possible. The present multi-electrode electrochemical system is easily expandable such as by using a series connection between the cells. For instance, in batteries, fuel-cell systems, and electrolysers typically only one anode and one cathode per subsystem are used. The present system allows for multiple cathodes and multiple anodes within a cell. An easy control of all individual cell-electrodes is obtained. The current of the individual electrodes is controlled by applying a total stack current and by redirecting parts of the current to other electrodes. In an example hydrogen and oxygen storage and controlled hydrogen and oxygen production is shown.

The present system can be fed by intermittent energy input and can provide electricity output (as battery) and controllable hydrogen and oxygen output, typically at the same time. Such may be a requirement for large-scale chemical producers, such as for ammonia, such as to replace steam methane reforming (H₂ input) with renewable electricity sources. The present system can also be applied in combination with oxyfuel cement production. The device can provide oxygen on demand for the production process. It is considered that the output of the cement production process is a highly concentrated CO₂ stream used for Carbon sequestration. This waste stream is also a good carbon source for CO₂ reduction (usually above 95% which is much higher than waste streams from e.g. fossil fuel power plants, which is usually around 35%). So in addition to renewable H₂ production also carbon based fuels can be produced, with a negative carbon footprint
(Cement absorbs CO₂, hence the negative carbon footprint). Controlled hydrogen output is also desirable for integration of renewable H₂ for upgrading biomass related processes. Usually all this processes include a water-gas shift step, adding H₂ shift the equilibrium for CO₂ towards CO => higher carbon utilisation of biomass processes.

It is noted that the present chemical fuel can in principle be any fuel that can be made from fluids by electrolysis; the fuel provides energy when it is oxidized.

With the term "fluid" any gaseous or liquid is indicated. With the term "adjacent" it is implied two elements that are adjacent are in direct or indirect contact with one and another. With the term "appendant" it is implied that elements, such as the electrodes, form an alternative to one and another, i.e. can be used as subsidiary to one and another, and are additional to one and another, i.e. can be used both at the same time.

Details of a for the present invention exemplary suitable cell can be found in WO2016/178564 A1. Especially figures 1A and 1B, and the description thereof provide details, as well as methods of operation such a cell and boundary conditions thereof. Some details are that each cell may at least comprise an opening for introduction of the respective aqueous liquids. The aqueous liquid used is especially a basic aqueous liquid, such as comprising one or more of KOH, LiOH, BaOH₂, and NaOH. The cell aqueous liquid within the cells are preferably alkaline, such as at least 0.1 mmole/1 OH⁻, especially at least 3 mole/1 OH⁻, even more especially at least 3 mole/1 OH⁻, such as at least about 6 mole/1 OH⁻. The concentration of the hydroxide in water is typically in the range of 4.5- 8.4 mole/L (20-32 wt.% for KOH). Each cell may also comprise a further opening, especially configured for removal of the aqueous liquid and/or for removal of gas. Both may escape from the same opening. In an example the first cell gas comprises H₂ gas and the second cell gas comprises O₂. The gas flow may be in the range of about 0.1 ml/cm²/min- 100 ml/cm²/min, such as 1-10 ml/cm²/min, whereas refill of water may be in the order of 0.1-10 g/cm²/h, such as 0.3-0.5 g/cm²/h (@25 °C, 10⁵ kPa, 1 A/cm²) . Each cell also comprises electrodes. Exemplary embodiments of said electrodes and methods of making the same can be found in the above publication. Typically a first compartment comprises a Fe-based electrode, and the second compartment a Ni-based electrode, also in view of the electrolysis. The Ni-based electrode may comprise at least one of Co, La, Li, Fe, Ba, Pr, and combinations thereof. In an embodiment the amount of Ni(OH)₂ material is reduced significantly with respect to the nominal capacity of a Fe-based electrode. The Ni-based cathode can have a capacity of 50% or of even only 10% of the Fe based electrode. So the relative capacities of the electrodes (cathode and anode) can be varied, such as a Ni-based electrode having a capacity in the range of 10-80% of a Fe-based electrode. A pressure in a compartment may be as high as 20*10³ kPa-80*10³ kPa, which pressure may be controlled. Fig. la and lb of WO2016/178564 schematically show a functional unit comprising a first compartment, a second compartment, and a membrane. The first compartment comprises a first electrode, such as an iron based electrode. The second compartment comprises a second electrode, such as a nickel based electrode. The membrane is for blocking transport of one or more of e.g. 0₂ and H₂ over the membrane. The membrane is preferably permeable for electrolytes, such for OH⁻, Na⁺, Li⁺, Ba²⁺, and K⁺. A cell may be substantially entirely enclosed by pressure containment. Fig. lb schematically depicts an embodiment of an energy apparatus having an electrical energy storage functionality and an electrolysis functionality. The first and second compartment comprises one or more openings for a liquid and for a gas. Further, electrical connections are provided.

In the present system an array of cells is provided. If one row of cells is provided these cells are connected electrically in series. If more than one row is provided these rows may be connected in series, in parallel, or both. Standardized cells may be used, as well as varying cells, though using largely the same cells is preferred in view of simplicity of operation. Each cell comprises a membrane for separating liquids being present in a first and second compartments. The liquids of each compartment comprise electrolytes, typically dissolved in an aqueous medium, which are separated by the membrane. Each compartment comprises at least one electrode. The at least one electrode may form a negative electrode or a positive electrode, one located in the first compartment and the other in the second compartment. The negative electrode comprises at least one Hydroxyl Storage Electrode (HSE) with at least one appendant Hydrogen Evolution Electrode (HEE), typically an array of appendant electrodes, whereas the positive electrode comprises at least one Oxygen Evolution Electrode (OEE) and optionally at least one appendant Proton Storage Electrode (PSE), typically an array of appendant electrodes. Cells are electrically connected to one and another. Amongst others thereto at least one first electrical connection to the positive electrode and at least one fourth electrical connection to the negative electrode is provided. The negative electrode of cell in is in electrical connection to the positive electrode of cell m+1. The fourth electrical connection at the cell side is split into a fifth electrical connection to the at least one HSE and a sixth electrical connection to the at least one HEE. The hydrogen evolution (i_{HE}) currents between HSEi and HEEi and optionally oxygen evolution (ion) currents, such as between optional PSEi and OEEi (ie [1,n]), are independently controlled with at least one controller; typically one controller per current is provided. The electrical connections and controller therewith provide a multi-triggered electrode. E.g. for power storage and power provision the at least one first electrical connection of the first cell is adapted to be electrically connected to a first terminal of an external DC power source/sink and wherein the at least one fourth electrical connection of the last (n^{th}) cell is adapted to be electrically connected to a second terminal of the DC power source/sink; energy generated by a power source can be stored as such in the present system.

With the present system chemical fuels can be generated using electrochemical reduction and oxidation. The most common example thereof is the oxidation and reduction of water, where hydrogen and oxygen are evolved. As an alternative, CO₂ can be reduced, together with water oxidation, to obtain carbon monoxide. As a third example, the combination of these reactions can yield hydrocarbons, which can be used as fuel.

In a second aspect the present invention relates to a method of operating an electrochemical hydrogen storage system according to the invention, comprising loading the system during daytime by a total system current i_{TSC} and discharging the system during night-time. As such e.g. imbalances in energy generation and consumption can be accommodated as well as electrolytic species such as hydrogen and oxygen can be provided.

In a third aspect the present invention relates to a battery with [1,n] cells, such as [2,n] cells, according to the invention with a controller for regulating power distribution. The present layout is equally applicable to small systems, such as to batteries with one or more cells.

In a fourth aspect the present invention relates to a chemical production unit comprising at least one electrochemical hydrogen storage system according to the invention, wherein hydrogen or oxygen is supplied, preferably at a constant flow rate.

Thereby the present invention provides a solution to one or more of the above mentioned problems and drawbacks.

Advantages of the present description are detailed throughout the description.

### DETAILED DESCRIPTION OF THE INVENTION

The present invention relates in a first aspect to an electrochemical hydrogen storage system.

In an exemplary embodiment of the electrochemical hydrogen storage system the positive electrode comprises at least one appendant Proton Storage Electrode (PSE), and wherein the first electrical connection at the cell side is split into a second electrical connection to the at least one PSE and a third electrical connection to the at least one OEE. As such a more versatile system is provided, in which also energy for night-time hydrogen production can be provided.

In an exemplary embodiment of the electrochemical hydrogen storage system the controller is a DC/AC controller with an individually controllable and preferably i_{AC}/i_{DC} current ratio in use, wherein the DC is provided at the electrode side of the controller. Such a controller is capable of addressing all individual electrodes independently and controlling storage of energy and hydrogen and oxygen, as well as production thereof.

In an exemplary embodiment of the electrochemical hydrogen storage system the controller has at least one AC current for controlling oxygen evolution (i_{OE}) currents and independently at least one AC current for controlling hydrogen evolution (i_{HE}) currents, preferably one AC current for controlling all oxygen evolution (i_{OE}) currents and preferably one AC current for controlling hydrogen evolution (i_{HE}) currents. Therewith all evolutions are controlled very well.

In an exemplary embodiment of the electrochemical hydrogen storage system the controller comprises a transformer. The transformer typically comprises a coil and optionally a magnetic element, such as a ferrite core.

In an exemplary embodiment of the electrochemical hydrogen storage system the HSE, HEE, optional PSE, and OEE electrodes are each independently selected from Ni, Fe, Cd, Co, W, Mo, Pt, Ru, Ir, C, and combinations thereof. These electrodes can be manufactured, such as identified in the WO2016/178564 A1 and are very suited for the present system.

In an exemplary embodiment of the electrochemical hydrogen storage system ne[3-1000], preferably n∈[4-100], such as n∈[5-50]; i.e. a relatively large number of cells in the multi cell array can be provided.

In an exemplary embodiment the electrochemical hydrogen storage system comprises k multi cell-arrays in parallel, wherein k∈[2-250], preferably k∈[3-100], more preferably ke[4-75], such as k∈[5-50]. In addition to or as an alternative to a large number of cells in an array, also multi cell-arrays may be provided in parallel, therewith significantly increasing a storage and production capacity. Such an increase may be relevant for large industrial scale plants.

In an exemplary embodiment the electrochemical hydrogen storage system comprises per cell each individually 2-100 Hydroxyl Storage Electrode (HSE) with each individually 2-100 appendant Hydrogen Evolution Electrode (HEE) together forming a negative electrode, preferably 5-50 HSE and 5-50 HEE, such as 10-30 HSE and 10-30 HEE, and each individually 2-100 optional Proton Storage Electrode (PSE) with each individually 2-100 appendant Oxygen Evolution Electrode (OEE) forming a positive electrode, preferably 5-50 PSE and 5-50 OEE, such as 10-30 PSE and 10-30 OEE. For good control and efficiency a large number of electrodes may be provided.

In an exemplary embodiment of the electrochemical hydrogen storage system at least one HSE electrode is adjacent to at least one HEE electrode, preferably wherein all HSE electrodes are adjacent to at least one HEE electrode, such as in an intermittent mode.

In an exemplary embodiment of the electrochemical hydrogen storage system at least one optional PSE electrode is adjacent to at least one OEE electrode, preferably wherein all optional PSE electrodes are adjacent to at least one OEE electrode, such as in an intermittent mode.

In an exemplary embodiment of the electrochemical hydrogen storage system the at least one HSE electrode and at least one HEE electrode form an array of electrodes.

In an exemplary embodiment of the electrochemical hydrogen storage system the at least one PSE electrode and at least one OEE electrode form an array of electrodes.

In an exemplary embodiment of the electrochemical hydrogen storage system at least one of a number of HEE's is equal to a number of hydrogen evolution currents, a number of OEE's is equal to a number of oxygen evolution currents, a number of HSE's is equal to a number of controllable bidirectional HSE currents plus 1 (#HSE=#i_{HSE}+1), and a number of PSE's is equal to a number of controllable bidirectional PSE currents plus 1.

In an exemplary embodiment of the electrochemical hydrogen storage system electrolytes are selected from OH⁻ and H₂ for the HEE side, preferably at a concentration of 0.1-12 mole/l, preferably 0.5-10 mole/l, such as 4-8 mole/l, and from OH⁻/O₂ for the OEE side, preferably at a concentration of 0.1-12 mole/l, preferably 0.5-10 mole/l, such as 4-8 mole/l.

In an exemplary embodiment of the electrochemical hydrogen storage system electrolytes are dissolved in water, preferably de-ionized water, preferably with a conductivity of < 0.5 mS/m, preferably < 100 µS/m, more preferably < 50 µS/m. Under laboratory conditions ultra-pure water is used with a conductivity of < 1 µS/m, such as 0.5 pS/m.

In an exemplary embodiment the electrochemical hydrogen storage system comprises in fluidic connection with the storage system at least one of a refill unit and a storage system, such as for water that may be consumed and may need to be replenished, that may be formed, as well as a refill and storage for electrolytes.

In an exemplary embodiment the electrochemical hydrogen storage system comprises at least one liquid-level sensor, preferably a sensor per cell. Two exemplary systems may be considered. A system comparable to a bipolar alkaline electrolyser; in this configuration all cells are filled with electrolyte and the cells may be connected via piping to a gas/liquid-separation tank. In this configuration only one sensor in the tank is sufficient and one only needs to refill in one place. It is also possible, that each cell is a stand-alone system; then a sensor for each cell may be required. To monitor a liquid level in a cell, especially in view of water consumption, a sensor is preferably provided. If the level is too low water can be replenished.

In a second aspect the present invention relates to a method of operating an electrochemical hydrogen storage system according to the invention.

In an exemplary embodiment of the present method a fraction of power available for loading is used for storing hydrogen, preferably a fraction of > 0.25, more preferably a fraction of > 0.50, such as > 0.75. Therewith a much higher efficiency and storage is obtained.

In an exemplary embodiment the present method comprises charging in daytime at least one cell by providing a part of an i_{TSC} current to at least one HSE and through a cell to at least one PSE, and providing electrolysis in daytime by providing a part of an i_{TSC} current to at least one HEE and through a cell to at least one OEE, discharging at least one cell during night time by providing an i_{TSC} current to at least one PSE and through a cell to at least one HSE and providing electrolysis in a cell by a current from at least one OEE to at least one PSE and electrolysis in a cell by a current from at least one HEE to at least one HSE. Therewith energy and/or electrolytic species as oxygen and hydrogen is/are stored and released in an efficient and cost effective way.

In an exemplary embodiment of the present method in at least one cell, preferably in all cells, in daytime 75-100% of the i_{TSC} current is provided to the at least one HSE, preferably 90-99.99%, more preferably 99-99.9%, such as 99.5%-99.85%, and independently 75-100% of the i_{TSC} current is provided to the at least one PSE, preferably 90-99.99%, more preferably 99-99.9%, such as 99.5%-99.85%, and/or wherein in night-time 75-100% of the i_{TSC} current is provided to the at least one HSE, preferably 90-99.99%, more preferably 99-99.9%, such as 99.5%-99.85%, and independently 75-100% of the i_{TSC} current is provided to the at least one PSE, preferably 90-99.99%, more preferably 99-99.9%, such as 99.5%-99.85%.

In an exemplary embodiment of the present method in at least one cell, preferably in all cells, in daytime 75-100% of the i_{TSC} current is provided to the at least one HEE, preferably 90-99.99%, more preferably 99-99.9%, such as 99.5%-99.85%, and independently 75-100% of the i_{TSC} current is provided to the at least one OEE, preferably 90-99.99%, more preferably 99-99.9%, such as 99.5%-99.85%, and/or wherein in night-time no current i_{TSC} is provided and electrolysis is performed by providing a current from the OEE to the PSE (electrons flow from the OEE to the PSE) and from the HEE to the HSE (electrons flow from the HSE to the HEE).

In an exemplary embodiment of the present method in at least one cell, preferably in all cells, in daytime 15-90% of the i_{TSC} current is provided to the at least one HSE, preferably 35-75%, more preferably 50-70%, such as 60%-65%, and independently 10-85% of the i_{TSC} current is provided to the at least one HEE, preferably 20-50%, more preferably 25-40%, such as 30%-35%, and independently 1-50% of the i_{TSC} current is provided to the at least one PSE, preferably 2-25%, more preferably 5-20%, such as 8%-12%, and independently 50-99% of the i_{TSC} current is provided to the at least one OEE, preferably 60-95%, more preferably 75-92%, such as 85%-90%.

In an exemplary embodiment of the present method in night-time 80-1000% of the i_{TSC} current is provided to the at least one HSE, preferably 200-750%, more preferably 400-700%, such as 500%-600%, and independently a current i_{HE} is provided from the HEE to the HSE, and independently 75-100% of the i_{TSC} current is provided to the at least one PSE, preferably 90-99.99%, more preferably 99-99.9%, such as 99.5%-99.85%. It is noted that a current i_{HE} from HEE to HSE may relate to 100% of the i_{TSC}.

The above shows that the present system can be operated in various ways, making the system versatile and applicable in various environments. Is it worthwhile to note that not only day-night fluctuations can be smoothed out by the system, but that the system can also smooth out short time variations (e.g. caused by clouds, demand peaks and so on).

In an exemplary embodiment of the present method currents are switched on during a first period of time and are switched off during a second period of time. Depending on demand and depending on supply the present system can be switched and controlled in a sophisticated way.

In a third aspect the present invention relates to a battery.

In a fourth aspect the present invention relates to a chemical production unit.

In an exemplary embodiment the present chemical production unit comprises at least one of a biogas production unit, a cement production unit, an ammonia production unit, a urea production unit, and a syngas production unit.

The one or more of the above examples and embodiments may be combined, falling within the scope of the invention as defined by the appended claims.

### EXAMPLES

The below relates to examples, which are not limiting in nature.

Control of operating pressure during different operation conditions.

The pressure control of systems including a HSE differ from "normal" alkaline electrolysers as the level of electrolyte may fluctuate due to fluctuations of the State of Charge (SoC) of the HSE. The following reactions describe operation conditions:
Battery operation only (PSE, Ni compound and HSE, Fe (or Cd)): 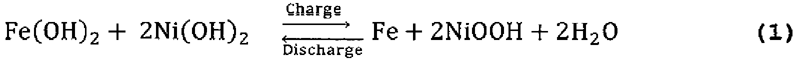
Charging the HSE electrode together with oxygen production: 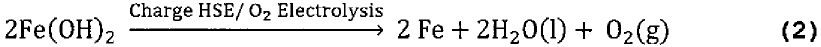
Discharging the HSE in combination with hydrogen production: 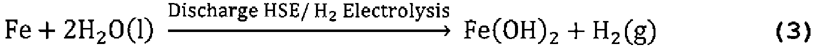
Charging the PSE together with hydrogen production: 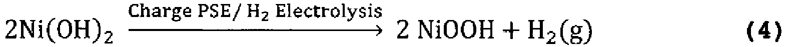
Discharging the PSE in combination with oxygen production: 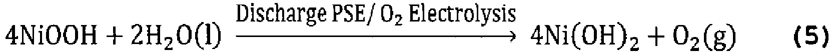
Electrolysis:

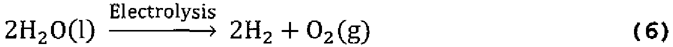

It can be observed from reaction (1), relating to battery-operation only, that water is decomposed during discharging to form iron hydroxide and nickel hydroxide, whereas water is released during charging to form iron and nickel oxy-hydroxide. Furthermore water is consumed during electrolysis, see reaction (6), and also during operation conditions as described by reaction (3) and (5). On the other hand, what might not be obvious, water is released in reaction (2), relating to charging the HSE in combination with oxygen production. Consequently the concentration and density of the electrolyte as well as the filling level of the electrolyte may fluctuate during operation.

Variations in filling level may influence the head pressure of the hydrogen and oxygen gas separation systems (especially under pressurized operation). Releasing water (reaction (1) charging and reaction (2)) can be compensated by extra tolerance in the electrolyte level in the liquid-gas separation tanks. Consuming water (discharging reaction (1) and reactions (3), (5), (6)) can be compensated by an intelligent refill system. Refilling should not be correlated to the production of hydrogen and oxygen, the state of charge of the HSE needs to be considered.

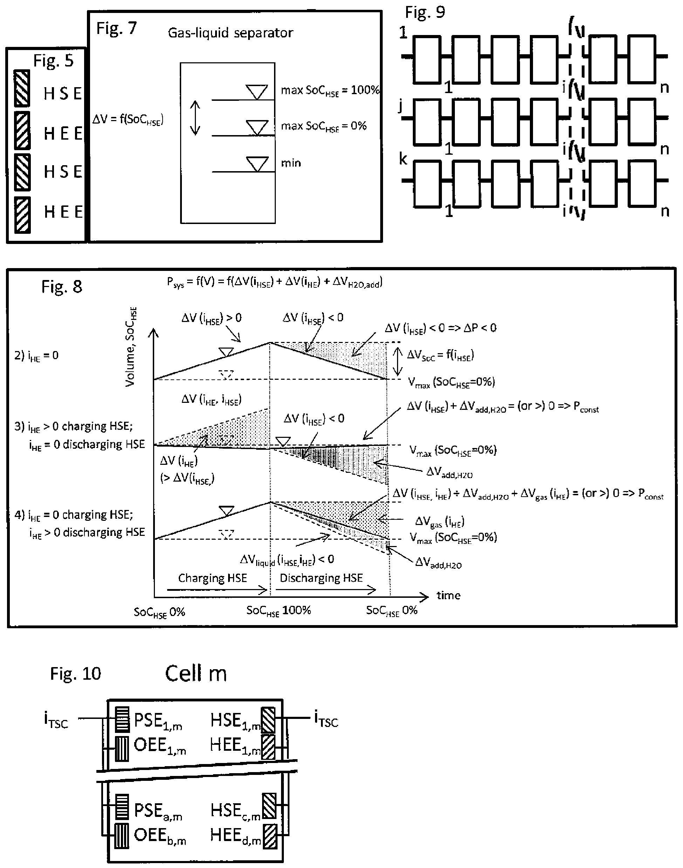

An immediate refill is only required while discharging the battery functionality (reaction 1) to keep the operating pressure constant. Refill cause by reactions (3), (5) and (6) can be postponed as the volume of gas produced will exceed the volume of liquid water consumed. Refill can start when the electrolyte level reaches a defined minimum level. However, refill should not exceed a maximum level for state of charge (SoC) of the HSE 0%, even when SoC of HSE equals 100% to have a possibility to refill the system and keep the pressure constant when discharging the HSE from SoC 100% to SoC 0% and reach the max level for HSE 0% (see fig. 7).

One might also consider the electrolyte-level with respect to a charge-discharge-electrolysis cycle. The following figure 8 shows the trend of the electrolyte level with respect to the level of charge of the HSE. For a special case with only charging and discharging the HSE under pressurized configuration the following conclusions may be drawn:
1) In order to keep the pressure constant water has to be refilled during discharging the HSE.
2) Refilling without electrolysis will lead to successive filling of the system.
   For a case of additional gas-production the following conclusions may be drawn:
3) For the case that no gas-production takes place during discharging the HSE the amount of water consumption for electrolysis previous to discharging needs to exceed the storage fluctuation caused by electrical energy storage. Then water refill can take place during discharging and the electrolyte-level and system pressure will remain.
4) For the case that gas-production takes place only during discharging the HSE, then the volume of the produced gasses can replace the liquid volume. In this case the volumetric (pressure dependent) production rate each of the both gasses, oxygen and hydrogen, needs to compensate for halve the volume reduction caused by water uptake of the electrodes.
5) For the case that gas-production takes place during charging and discharging the HSE then case 4) forms an upper limit for the individual gas-production rates. Water consumption for electrolysis during the charging step can be brought into account to reduce gas-production rates during discharging. If the water consumption for electrolysis during charging exceeds the volume fluctuation caused by storage fluctuations (case (3)) than volume change can be compensated by water replenishment only.

Another possibility to handle fluctuations could be to keep filling at a certain set-point and to add an electrolyte buffer system to the overall system, which buffer compensates level-fluctuations caused by water uptake/release by the HSE, As such the operating pressure of the system can be kept constant during all operating conditions.

The storage need of a system can be calculated. For instance, in order to store 1Ah of electrical energy 0.0373 mole of (e-) needs to be stored in an electrode. One Fe atom can store two electrons and one Ni atom one electron (see equation (1)). The amount of moles of water release during charging is equal to the amount of moles of Ni-atoms and two times the amount of Fe-atoms. This implies that for 1 Ah of electrical store 0.336 g of H₂O need to be stored. For 1 Ah of equivalent hydrogen storage (see equation (2)) half the storage capacity 0.168 g H₂O compared to electrical storage is required. Assuming a density of water of 1 g/ml, the volume change caused by change of SoC of the HSE will cause the following volumetric changes: 0.336 ml/Ah electrical storage and 0.168 ml/Ah hydrogen storage. Assuming larger systems with about 10 kWh electrical storage capacity (provides 10 hours one kW energy) and a hydrogen storage capacity of 50 kWh hydrogen storage capacity (provides 10 hours of 5 kW hydrogen production) would require a storage capacity of 3.35 1 + 8.4 1 = 11.761. This might seems small, however the system-size is still small. A kW-size is suitable for pilot-projects, whereas real large-scale units might have the size of MW's, thus the storage capacity for such large-scale projects will increase by a factor 1000.

To reduce the amount of electrolyte storage capacity a combined system consisting of an electrolyte storage tank and an intelligent refill-system can be set in place, demonstrated by the proposed system for ammonia-production.

A balance for daytime-charging shows that in total 0.552 H₂O is released, while 0.373 H₂O is consumed. This implies that the electrolyte-level will increase by 0.179 H₂O. A combined system of consisting of an electrolyte-storage buffer and an intelligent refill system makes sense therefore. The electrolyte-storage buffer needs to be sized to about 1/3 (=0.179/0.552) of the total water release, as about 2/3 (0.373/0.552) of the water release can be handled by an intelligent refill system.

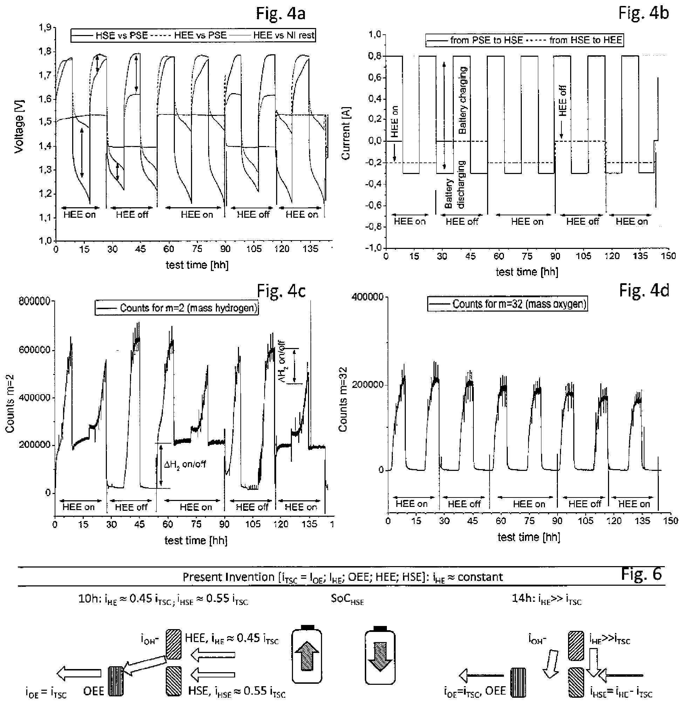

In a to some extent simplified approach is shown in fig. 6. The system-configuration shown leads to an alkaline electrolyser which is capable of storing hydrogen and releasing the hydrogen at any desired moment in time. An advantage is that electrodes of alkaline electrolysers are typically more efficient than battery electrodes at high rates. Without a PSE the system is less complex in configuration and an amount of Nickel for the electrode is reduced to a minimum. A disadvantage is that the system can not supply energy for night-time hydrogen production by itself, and therefore for this purpose an external power supply (battery or grid connection) is required. Also in this system the i_{OE} can not be controlled.

The main system corresponds to the proposed solution of multi-triggered electrodes. The positive side consists only of an OEE, whereas the negative side consists of both electrodes, the HEE and the HSE. The HEE and HSE are connected as proposed. It is noted that a system without a PSE limits the direction of the main stack current. As the OEE cannot be reversed the current needs to flow always in one direction. This does simplify the main control unit of the system. The current control for HEE will also always be one-directional.

An important consideration for the system of fig. 6 is a constant hydrogen production and hydrogen storage. During night-time also a small amount of external energy may be required to be supplied to the system to provide 1) a minimal current to the OEE to keep the electrode protected (about 5% of the maximum daytime current) and 2) production of hydrogen from the storage. The advantage of delayed electrolysis remains, only the voltage difference from HSE to HEE (about 0.25V) is required for night-time hydrogen production indicating that about 80% of the energy-requirement for electrolysis is already paid for at daytimes when electricity is cheap.

The invention is further detailed by the accompanying figures, which are exemplary and explanatory of nature and are not limiting the scope of the invention. To the person skilled in the art it may be clear that many variants, being obvious or not, may be conceivable falling within the scope of protection, defined by the present claims.

### FIGURES

The invention although described in detailed explanatory context may be best understood in conjunction with the accompanying figures.
Fig. 1a-b shows an illustration of the concept of multi-triggered electrodes.
Fig. 2 shows control of sub-electrodes and operation modes.
Figure 3a-c is a demonstration of battery and electrolysis functionality. Also demonstration of combined functionality for the purpose of ammonia production (constraints:
   daily/night fluctuations for electricity input and constant hydrogen output)
Figures 4a-4d demonstrate a three electrode setup.
Fig. 5 shows an appendant multi-electrode.
Fig. 6 shows a system without PSE.
Fig. 7 shows functioning of gas-liquid separation.
Fig. 8 shows charging and discharging effects.
Fig. 9 shows an array of k parallel systems according to the invention.
Fig. 10 shows a schematic cell layout.

### DETAILED DESCRIPTION OF THE FIGURES

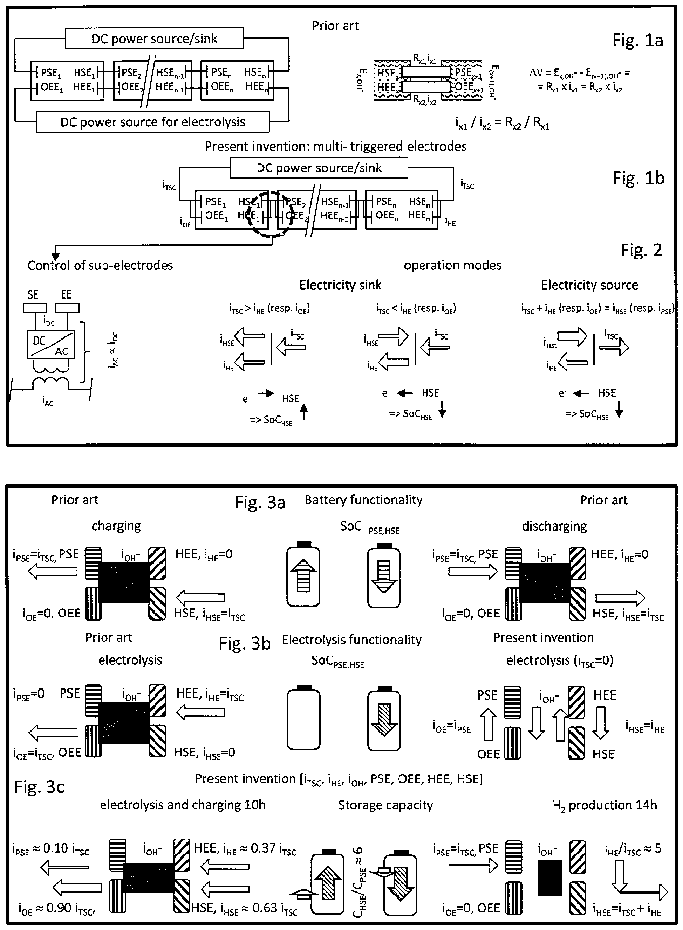

Figure 1a schematically shows a prior art multi-cell array identifying that the prior art systems lack control for all cases besides the single cell system with defined superimposed electrode behaviour. For all other cases the current flow will adjust so that the voltage drop from the bulk of electrolyte of one cell to the bulk of electrolyte to the adjacent cell will be equal, path-independent. The resistances depicted in Figure 1 (top right) simplify the system, whereas in reality the functions for the resistances comprise at least rate-dependent anode and cathode reactions so that resistance control seems infeasible.

The present 'multi-triggered electrodes' enable controlling these advanced systems, see Figure 1b. These advanced systems comprise electrochemical cells in series connection representing an advanced bipolar multi-electrode configuration. Each individual cell consist of a Hydroxyl Storage Electrode (HSE) with an appendant Hydrogen Evolution Electrode (HEE) together forming the negative electrode and a Proton Storage Electrode (PSE) with an appendant Oxygen Evolution Electrode (OEE) forming the positive electrode. Each cell possesses one connection to the positive and one connection to the negative electrode defining the array current iTSC (Total stack current). The subset electrodes HEE and OEE are fed via a side-line from the main-line. All currents in the system are fined by a superim⁻ posed i_{TSC}, the system having controllable currents for hydrogen evolution (i_{HE}) regulating the electron flow from the HEE to the main-line and a controllable current for oxygen evolution (ice) regulating the flow of electrons to the OEE from the main-line. The difference between i_{TSC} and i_{HE} respectively i_{OH} defines the currents form/to the storage electrode (SE), HSE (i_{HSE}) respectively PSE (i_{PSE}). Expandability of this concept is provided by observing voltage and current rules.

An important issue to get the concept of multi-triggered electrodes in advanced electrochemical systems to work is controllability of all subset electrode currents throughout the entire assembly. Two premises seem essential:
1) Isolated control: the potential of all subset-electrodes is linked to the potential of their SE hence all subset electrodes exhibit voltage offset for each other.
2) Identical currents for all sets of subset electrodes: Here we suggest control of these sub-circles through an AC current control unit.

An advantage of using a hydroxyl (resp. proton) storage electrode for hydrogen (resp. oxygen) production lays within that most of the work required for the electrolysis process is performed while electricity is abundant. Charging the storage electrodes typically takes place at potentials around 1.6V. Electrolysis typically requires extra over-potentials of around 0.1V, in total approximately 1.7V. The electrical discharge potential typically is approximately 1.25 V. The potential required to discharge the hydroxyl storage electrode versus the hydrogen evolution electrode is approximately 0.25V. (0.25/1.7 = 15%) which demonstrates that most of the work required for hydrogen production is accomplished during charging the storage electrodes. The ratio of discharge potential to hydrogen evolution potential is 1.25/0.25 = 5, which means that one electron used for discharging can power 5 electrons for hydrogen evolution. Under the assumption, that all electrical storage capacity is used for hydrogen production 1/6 of the storage capacity is used for electrical storage while 5/6 is used for storing hydrogen. In this case, the capacity ratio for storing hydroxyl ions (for hydrogen production and electrical storage) to storing protons (no storage of oxygen; only electrical storage) is approximately 6. Assuming 10 hours daytime with constant electricity input and 14 hours night-time with constant hydrogen output throughout the day, the daytime current for hydrogen production (i_{HE}) is about 37% of the total current (i_{TSC}; i_{TSC} = i_{HE}* (1 +1.4*6/5) ) . The current for charging the proton storage electrode is approximately (1.4*i_{HE} /5=) 10.4% of the total current, for electrical discharging the current is approximately (i_{HE}/5=) 7.5% of the total current.

In view of figure 1a the following is noted. For controllability the system inside a cell preferably defined in functional components. In a given cell m the number of electrodes forming the positive electrode (a PSE's + b OEE's) and the number of electrodes forming the negative electrode (c HSE's +d HEE's) are preferably equal to the number of controlled current flows i to the positive electrode assembly and to the negative electrode assembly (see fig. 10). Both the number and arrangement of electrodes a,b,c,d are independent and free of choice. In fig. 10 also electrical connections 1-6 are indicated.

The total stack current i_{TSC} is a controlled current. This indicates, that for the assembly of electrodes forming the positive electrode the number of controlled electrodes is equal to a+b-1; the resulting current for the "uncontrolled" electrode is the sum of all other currents. Furthermore this indicates for the assembly of electrodes forming the negative electrode that the number of controlled electrodes is equal to c+d-1; the resulting current for the "uncontrolled" electrode is the sum of all other currents.

In general it is considered that currents to storage electrodes are bi-directional, currents to Evolution electrodes are on-directional, and all electrodes are isolated from each other.

Controllability of different HSE/PSE electrodes is an asset as different regions of the electrode's assemblies can be charged and/or discharged. This means, that currents can be forced to electrode regions which would normally not be charged due to their unfavourable position in the electrochemical system.

Figure 2 shows the control of sub-electrodes and effects thereof. Sets of sub-electrodes can be controlled by an AC current for control of the DC current, which is connected to the electrodes. The right hand side of figure 2 demonstrates operation modes for a negative electrode consisting of a HSE and a HEE electrode. When operating as electricity sink and when i_{TSC} exceeds i_{HE} charging together with hydrogen production takes place. The currents i_{HSE} and i_{HE} have the same direction, electrons flow to the HSE and to the HEE, the State of Charge (SoC; 0% complete discharge electrode; 100% fully charged electrode) of the HSE increases. When operating as electricity sink and when i_{HE} exceeds i_{TSC} discharging together with hydrogen production takes place. The currents i_{HSE} and i_{HE} have different directions, electrons flow from the HSE and to the HEE, the State of Charge (SoC; 0% complete discharge electrode; 100% fully charged electrode) of the HSE decreases. When operating as electricity source the current i_{HSE} equals the sum of i_{HE} and i_{TSC}; discharging together with hydrogen production takes place. The currents i_{HSE} and i_{HE} have different directions, electrons flow from the HSE and to the HEE, the State of Charge (SoC; 0% complete discharge electrode; 100% fully charged electrode) of the HSE decreases.

Figures 3a-c demonstrate the operation principles for battery functionality and for the electrolysis functionality. From figure 3b it is obvious that having only the electrolysis functionality is not sufficient. This concept works during daytime, when electricity is abundant. However, during night-time the storage capacity is depleted, and needs to be regenerated in subsequent cycles. Overall stoichiometric hydrogen and oxygen production is required. Figure 3c demonstrates the discussed functionality as constant hydrogen supply for ammonia production. Note that only 1/5 of the electrical storage capacity is required compared to a conventional solution, where a battery is applied for backing up an electrolyser stack, were 100% of the electrical storage capacity is required.

The suggested device for hydrogen and oxygen storage can be integrated in various other processes, e.g. as a hydrogen and oxygen supply for biomass related processes and for oxy-fuel cement production. Producing syngas from biomass usually requires a water-gas shift reaction, feeding additional hydrogen to this process increases the carbon conversion efficiency (more CO; less CO₂). Also integration of hydrogen to anaerobic digestion is feasible and increases the carbon conversion and product quality, in this case methane, significantly. Cement production causes significant carbon dioxide emission and carbon capture is considered one path to reduce carbon emissions. Alternative ways of producing cement may lead to high-quality carbon-dioxide output suitable for carbon capture. Here the device can serve for two purposes: controlled oxygen production to be used in the oxy-fuel process and the hydrogen can be used to convert carbon dioxide to methane or syngas. The air-separation unit to produce oxygen and carbon sequestration can be replace by this device plus a carbon convert to produce carbon fuels with a negative carbon footprint. For this process hydrogen production will be limiting, meaning that there will always be enough excess oxygen to drive the oxy-fuel process.

Figures 4a-4d demonstrate a three electrode setup. Figure 4a shows a measured potential versus time for measurements: HSE vs PSE (full line) HEE vs PSE (dashed line) and HEE vs. the Ni electrode at rest (central dotted line at 1.5 and 1.4 V respectively). The HEE is switched on, off, on, off and on again. Figure 4b shows the applied test currents; in full line the current from PSE to HSE and in dashed line from HSE to HEE. The effective current the PSE experiences is equal to the dashed line; the effective current the HEE experiences is the dashed line; the effective current the HSE experiences is the sum of the full line and the dashed line meaning that the current during charging is reduced when the HEE is on and the current during discharging is increased when the HEE is on. When the HEE is on, left section, the HSE is discharging and H₂ production occurs at the HEE. Figure 4c shows the counts measured for m=2 indicating hydrogen production. When the HEE is off, hydrogen production occurs during charging, not during discharging. The pattern is comparable to the patterns determined for the battolyser. When the HEE is on there is levelled out hydrogen production during charging and discharging. The peaks during charging decrease and there is uniform H₂ production during discharging. In the central section the reduced peak indicates a better H₂ production when the HEE is on. Figure 4d shows the counts for m=32 indicating oxygen production. The oxygen production follows the charge insertion of the PSE. There is no effect of turning on/off the HEE visible.

Different approaches can be used for decoupled hydrogen and oxygen production. First in a setup with a redox-flow battery with extra catalytic reactors for H₂ and O₂ production. Second there is a setup of applying an electron-coupled-proton buffer. And there is a setup of using one electrode for hydrogen and one electrode for oxygen evolution and producing both gasses at different times. All setups are different from the approach proposed having four electrodes, i.e. two for storage and two for gas production. Also the controllability varies. In the proposed setup the rates are easily controllable. Furthermore the proposed setup is scalable in a bipolar setup with easy control of all sub-set electrodes.

The application of multi-triggered electrodes is not limited to the concept presented above. The concept can also be applied for a battery, a fuel-cell and other electrochemical systems. The concept of multi-triggered electrodes allows to design batteries in new ways. Currently batteries have one positive and one negative electrode. With the proposed concept, batteries can have multiple positive and negative electrodes, and all individual electrodes can be controlled. In this application all electrodes would be storage electrodes the control system needs to be arranged so that charging and discharging is possible. Advanced battery-packs are another application for the proposed concept. Batteries may consist of as many as 7104 cells, arranged in 74 parallel arrays, each consisting of 96 cells in series. During charging the same potential is applied over parallel arrays, resulting in a light in-balance of the individual cells. Regular balancing is required so that all individual cells are charged to the same state of charge. The proposed configuration would allow for control of current for the individual parallel arrays making balancing redundant.

The concept of multi-triggered electrodes provides for a new design of fuel-cell systems. At present the size of fuel-cell systems is limited such as due to concentrations in the fuel. The achievable potential is determined by the lowest reactant concentration. Furthermore, there is always some fuel left in the outflow. Applying multi-triggered electrodes would allow for generating a voltage profile across the electrode to benefit from higher voltages (due to higher concentrations) at the inlet and to utilize more fuel at the outlet. This together could lead to larger systems. Here it should be noted, that the direction of current flow is fixed and that the total stack current is equal to the sum of the currents of the individual electrodes.

The concept of multi-triggered electrodes can be applied in all processes were selectivity is required, e.g. in electro-chemical CO₂ reduction. Applying different groups of electrodes with different selectivity's would allow to get control over the output products and to change them if required. Furthermore, pulsing at certain selective electrodes could lead to the production of intermediates required for the desired product.

The figures have been detailed throughout the description.

## Claims

1. Electrochemical storage system comprising
a multi cell-array with [2,n] cells electrically connected in series,
each cell comprising
a membrane, a first cell compartment and a second cell compartment, and electrolytes,
at least one Hydroxyl Storage Electrode (HSE) with at least one appendant Hydrogen Evolution Electrode (HEE) together forming a negative electrode,
at least one Oxygen Evolution Electrode (OEE) forming a positive electrode,
at least one first electrical connection to the positive electrode and at least one fourth electrical connection to the negative electrode,
wherein the fourth electrical connection at the cell side is split into a fifth electrical connection to the at least one HSE and a sixth electrical connection to the at least one HEE,
wherein the negative electrode of cell m is in electrical connection to the positive electrode of cell m+1,
wherein hydrogen evolution (i_{HE}) currents between HSEᵢ and HEEᵢ (i∈[1,n]) are independently controlled with at least one controller,
wherein electrical connections provide a multi-triggered electrode, and
wherein the at least one first electrical connection of the first cell is adapted to be electrically connected to a first terminal of an external DC power source/sink and wherein the at least one fourth electrical connection of the last (n^{th}) cell is adapted to be electrically connected to a second terminal of the DC power source/sink.

2. Electrochemical hydrogen storage system according to claim 1, wherein the positive electrode comprises at least one appendant Proton Storage Electrode (PSE), and wherein the first electrical connection at the cell side is split into a second electrical connection to the at least one PSE and a third electrical connection to the at least one OEE, and wherein oxygen evolution (i_{OE}) currents between PSEi and OEEᵢ (i∈[1,n]) are independently controlled with the at least one controller.

3. Electrochemical hydrogen storage system according to claim 2, wherein the controller is a DC/AC controller with an individually controllable i_{AC}/i_{DC} current ratio in use, wherein the DC is provided at the electrode side of the controller; wherein the controller has at least one AC current for controlling oxygen evolution (i_{OE}) currents and independently at least one AC current for controlling hydrogen evolution (i_{HE}) currents, preferably one AC current for controlling all oxygen evolution (i_{OE}) currents and one AC current for controlling hydrogen evolution (i_{HE}) currents; wherein the controller comprises a transformer.

4. Electrochemical hydrogen storage system according to any of claims 1-3, wherein the HSE, HEE, optional PSE, and OEE electrodes are each independently selected from Ni, Fe, Cd, Co, W, Mo, Pt, Ru, Ir, C, and combinations thereof; wherein n∈[3-1000]; the electrochemical hydrogen storage system comprising k multi cell-arrays in parallel, wherein k∈[2-250].

5. Electrochemical hydrogen storage system according to any of claims 1-4, comprising per cell each individually 2-100 Hydroxyl Storage Electrode (HSE) with each individually 2-100 appendant Hydrogen Evolution Electrode (HEE) together forming a negative electrode, and each individually 2-100 optional Proton Storage Electrode (PSE) with each individually 2-100 appendant Oxygen Evolution Electrode (OEE) forming a positive electrode,
wherein preferably at least one of a number of HEE's is equal to a number of hydrogen evolution currents, a number of OEE's is equal to a number of oxygen evolution currents, a number of HSE's is equal to a number of controllable bidirectional HSE currents plus 1, and a number of PSE's is equal to a number of controllable bidirectional PSE currents plus 1.

6. Electrochemical hydrogen storage system according to any of claims 1-5, wherein at least one HSE electrode is adjacent to at least one HEE electrode, preferably wherein all HSE electrodes are adjacent to at least one HEE electrode, and/or wherein at least one optional PSE electrode is adjacent to at least one OEE electrode, preferably wherein all optional PSE electrodes are adjacent to at least one OEE electrode; wherein the at least one HSE electrode and at least one HEE electrode form an array of electrodes, and/or wherein the at least one PSE electrode and at least one OEE electrode form an array of electrodes; wherein electrolytes are selected from OH⁻ and H₂ for the HEE side, preferably at a concentration of 0.1-12 mole/l, and from OH⁻/O₂ for the OEE side, preferably at a concentration of 0.1-12 mole/l; wherein electrolytes are dissolved in water, preferably de-ionized water, preferably with a conductivity of < 0.5 mS; the electrochemical hydrogen storage system comprising in fluidic connection with the storage system at least one of a refill unit and a storage system.

7. Electrochemical hydrogen storage system according to any of claims 1-6, comprising at least one liquid-level sensor.

8. Method of operating an electrochemical hydrogen storage system according to any of claims 1-7, comprising loading the system during daytime by a total system current i_{TSC} and discharging the system during night-time.

9. Method of operating according to claim 8, wherein a fraction of power available for loading is used for storing hydrogen.

10. Method according to any of claims 8-9, comprising
charging in daytime at least one cell by providing a part of an i_{TSC} current to at least one HSE and through a cell to at least one PSE, and providing electrolysis in daytime by providing a part of an i_{TSC} current to at least one HEE and through a cell to at least one OEE,
discharging at least one cell during night time by providing an i_{TSC} current to at least one PSE and through a cell to at least one HSE and providing electrolysis in a cell by a current from at least one OEE to at least one PSE and electrolysis in a cell by a current from at least one HEE to at least one HSE.

11. Method according to any of claims 8-10,
(A) wherein in at least one cell, preferably in all cells, in daytime 75-100% of the i_{TSC} current is provided to the at least one HSE, and independently 75-100% of the i_{TSC} current is provided to the at least one PSE, and/or
wherein in night-time 75-100% of the i_{TSC} current is provided to the at least one HSE, and independently 75-100% of the i_{TSC} current is provided to the at least one PSE, or
(B) wherein in at least one cell, preferably in all cells, in daytime 75-100% of the i_{TSC} current is provided to the at least one HEE, and independently 75-100% of the i_{TSC} current is provided to the at least one OEE, and/or
wherein in night-time no current i_{TSC} is provided and electrolysis is performed by providing a current from the OEE to the PSE and from the HEE to the HSE, or
(C) wherein in at least one cell, preferably in all cells, in daytime 15-90% of the i_{TSC} current is provided to the at least one HSE, and independently 10-85% of the i_{TSC} current is provided to the at least one HEE, and independently 1-50% of the i_{TSC} current is provided to the at least one PSE, and independently 50-99% of the i_{TSC} current is provided to the at least one OEE, and/or
(D) wherein in night-time 80-1000% of the i_{TSC} current is provided to the at least one HSE, and independently a current i_{HE} is provided from the HEE to the HSE, and independently 75-100% of the i_{TSC} current is provided to the at least one PSE.

12. Method according to any of claims 8-11, wherein currents are switched on during a first period of time and are switched off during a second period of time.

13. Battery comprising the electrochemical storage system according to any of claims 1-7, with a controller for regulating power distribution.

14. Chemical production unit comprising at least one electro-chemical hydrogen storage system according to any of claims 1-7, wherein hydrogen or oxygen is supplied by the system.

15. Chemical production unit according to claim 14, comprising at least one of a biogas production unit, a cement production unit, an ammonia production unit, a urea production unit, and a syngas production unit.

## Patentansprüche

1. Elektrochemisches Speichersystem, Folgendes umfassend
ein Mehrzellen-Array mit [2, n] Zellen, die elektrisch in Reihe geschaltet sind,
jede Zelle Folgendes umfassend
eine Membran, eine erste Zellkammer und eine zweite Zellkammer sowie Elektrolyte,
mindestens eine Hydroxyl-Speicherelektrode (HSE) mit mindestens einer dazugehörigen Wasserstoff-Entwicklungselektrode (HEE), die zusammen eine negative Elektrode ausbilden,
mindestens eine Sauerstoff-Entwicklungselektrode (OEE), die eine positive Elektrode ausbildet,
mindestens eine erste elektrische Verbindung mit der positiven Elektrode und mindestens eine vierte elektrische Verbindung mit der negativen Elektrode,
wobei die vierte elektrische Verbindung an der Zellenseite in eine fünfte elektrische Verbindung mit der mindestens einen HSE und in eine sechste elektrische Verbindung mit der mindestens einen HEE aufgeteilt ist,
wobei die negative Elektrode der Zelle m elektrisch mit der positiven Elektrode der Zelle m + 1 verbunden ist,
wobei Wasserstoff-Entwicklungsströme (i_{HE}) zwischen HSEᵢ und HEEᵢ (i 6 [1, n]) mit mindestens einer Steuervorrichtung unabhängig gesteuert werden,
wobei elektrische Verbindungen eine mehrfachausgelöste Elektrode bereitstellen, und
wobei die mindestens eine erste elektrische Verbindung der ersten Zelle eingerichtet ist, um elektrisch mit einem ersten Anschluss einer externen Gleichstromquelle/-Senke verbunden zu sein, und wobei die mindestens eine vierte elektrische Verbindung der letzten (n-ten) Zelle eingerichtet ist, um elektrisch mit einem zweiten Anschluss der Gleichstromquelle/-Senke verbunden zu sein.

2. Elektrochemisches Wasserstoff-Speichersystem nach Anspruch 1, wobei die positive Elektrode mindestens eine dazugehörige Protonen-Speicherelektrode (PSE) umfasst und wobei die erste elektrische Verbindung an der Zellenseite in eine zweite elektrische Verbindung mit der mindestens einen PSE und in eine dritte elektrische Verbindung mit der mindestens einen OEE aufgeteilt ist und wobei Sauerstoff-Entwicklungsströme (i_{OE}) zwischen PSEᵢ und OEEᵢ (i ∈ [1, n]) mit der mindestens einen Steuervorrichtung unabhängig gesteuert werden.

3. Elektrochemisches Wasserstoff-Speichersystem nach Anspruch 2, wobei die Steuervorrichtung eine Gleichstrom/Wechselstrom-(DC/AC)-Steuervorrichtung mit einem im Betrieb einzeln steuerbaren i_{AC}/i_{DC}-Stromverhältnis ist, wobei der Gleichstrom an der Elektrodenseite der Steuervorrichtung bereitgestellt wird; wobei die Steuervorrichtung mindestens einen Wechselstrom zum Steuern von Sauerstoff-Entwicklungsströmen (i_{OE}) und unabhängig mindestens einen Wechselstrom zum Steuern von Wasserstoff-Entwicklungsströmen (i_{HE}) , vorzugsweise einen Wechselstrom zum Steuern aller Sauerstoff-Entwicklungsströme (i_{OE}) und einen Wechselstrom zum Steuern von Wasserstoff-Entwicklungsströmen (i_{HE}) , aufweist; wobei die Steuervorrichtung einen Transformator umfasst.

4. Elektrochemisches Wasserstoff-Speichersystem nach einem der Ansprüche 1 bis 3, wobei die HSE-, HEE-, optional PSE- und OEE-Elektroden jeweils unabhängig aus Ni, Fe, Cd, Co, W, Mo, Pt, Ru, Ir, C und Kombinationen davon ausgewählt sind; wobei n 6 [3 - 1000]; wobei das elektrochemische Wasserstoff-Speichersystem k parallel geschaltete Mehrzellen-Arrays umfasst, wobei k ∈ [2 - 250].

5. Elektrochemisches Wasserstoff-Speichersystem nach einem der Ansprüche 1 bis 4, pro Zelle jeweils individuell 2 bis 100 Hydroxyl-Speicherelektroden (HSE) mit jeweils individuell 2 bis 100 dazugehörigen Wasserstoff-Entwicklungselektroden (HEE), die zusammen eine negative Elektrode ausbilden, und jeweils individuell 2 bis 100 optionale Protonen-Speicherelektroden (PSE) mit jeweils individuell 2 bis 100 dazugehörigen Sauerstoff-Entwicklungselektroden (OEE) umfassend, die eine positive Elektrode ausbilden,
wobei vorzugsweise mindestens eine einer Anzahl von HEE gleich einer Anzahl Wasserstoff-Entwicklungsströme ist, einer Anzahl von OEE gleich einer Anzahl Sauerstoff-Entwicklungsströme ist, einer Anzahl von HSE gleich einer Anzahl steuerbarer bidirektionaler HSE-Ströme plus 1 ist und einer Anzahl von PSE gleich einer Anzahl steuerbarer bidirektionaler PSE-Ströme plus 1 ist.

6. Elektrochemisches Wasserstoff-Speichersystem nach einem der Ansprüche 1 bis 5, wobei mindestens eine HSE-Elektrode an mindestens eine HEE-Elektrode angrenzt, wobei vorzugsweise alle HSE-Elektroden an mindestens eine HEE-Elektrode angrenzen und/oder wobei mindestens eine optionale PSE-Elektrode an mindestens eine OEE-Elektrode angrenzt, wobei vorzugsweise alle optionalen PSE-Elektroden an mindestens eine OEE-Elektrode angrenzen; wobei die mindestens eine HSE-Elektrode und die mindestens eine HEE-Elektrode ein Elektroden-Array ausbilden und/oder wobei die mindestens eine PSE-Elektrode und die mindestens eine OEE-Elektrode ein Elektroden-Array ausbilden; wobei Elektrolyte aus OH⁻ und H₂ für die HEE-Seite, vorzugsweise bei einer Konzentration von 0,1 bis 12 Mol/l, und aus OH⁻/O₂ für die OEE-Seite, vorzugsweise bei einer Konzentration von 0,1 bis 12 Mol/l ausgewählt sind; wobei Elektrolyte in Wasser, vorzugsweise in entionisiertem Wasser, vorzugsweise mit einer Leitfähigkeit von <0,5 mS, gelöst sind; wobei das elektrochemische Wasserstoff-Speichersystem in fluidischer Verbindung mit dem Speichersystem mindestens eines einer Nachfülleinheit und einem Speichersystem umfasst.

7. Elektrochemisches Wasserstoff-Speichersystem nach einem der Ansprüche 1 bis 6, mindestens einen Flüssigkeitspegelsensor umfassend.

8. Verfahren zum Betreiben eines elektrochemischen Wasserstoff-Speichersystems nach einem der Ansprüche 1 bis 7, Laden des Systems tagsüber mit einem Gesamtsystemstrom i_{TSC} und Entladen des Systems nachts umfassend.

9. Verfahren zum Betreiben nach Anspruch 8, wobei ein Stromanteil, der zum Laden verfügbar ist, zum Speichern von Wasserstoff verwendet wird.

10. Verfahren nach einem der Ansprüche 8 bis 9, Folgendes umfassend
Laden mindestens einer Zelle tagsüber durch Bereitstellen eines Teils eines i_{TSC}-Stroms an mindestens einer HSE und durch eine Zelle an mindestens eine PSE und Bereitstellen von Elektrolyse tagsüber durch Bereitstellen eines Teils eines i_{TSC}-Stroms an mindestens eine HEE und durch eine Zelle an mindestens eine OEE,
Entladen mindestens einer Zelle nachts durch Bereitstellen eines i_{TSC}-Stroms an mindestens eine PSE und durch eine Zelle an mindestens eine HSE und Bereitstellen von Elektrolyse in einer Zelle durch einen Strom von mindestens einer OEE an mindestens eine PSE und von Elektrolyse in einer Zelle durch einen Strom von mindestens einer HEE an mindestens eine HSE.

11. Verfahren nach einem der Ansprüche 8 bis 10,
(A) wobei in mindestens einer Zelle, vorzugsweise in allen Zellen, tagsüber 75 bis 100 % des i_{TSC}-Stroms an mindestens einer HSE bereitgestellt wird und unabhängig 75 bis 100 % des i_{TSC}-Stroms an der mindestens einen PSE bereitgestellt wird und/oder
wobei nachts 75 bis 100 % des i_{TSC}-Stroms an der mindestens einen HSE bereitgestellt wird und unabhängig 75 bis 100 % des i_{TSC}-Stroms an der mindestens einen PSE bereitgestellt wird oder
(B) wobei in mindestens einer Zelle, vorzugsweise in allen Zellen, tagsüber 75 bis 100 % des i_{TSC}-Stroms an mindestens einer HEE bereitgestellt wird und unabhängig 75 bis 100 % des i_{TSC}-Stroms an der mindestens einen OEE bereitgestellt wird und/oder
wobei nachts kein Strom i_{TSC} bereitgestellt wird und eine Elektrolyse durchgeführt wird durch Bereitstellen eines Stroms von der OEE an die PSE und von der HEE an die HSE oder
(C) wobei in mindestens einer Zelle, vorzugsweise in allen Zellen, tagsüber 15 bis 90 % des i_{TSC}-Stroms an der mindestens einen HSE bereitgestellt wird und unabhängig 10 bis 85 % des i_{TSC}-Stroms an der mindestens einen HEE bereitgestellt wird und unabhängig 1 bis 50 % des i_{TSC}-Stroms an der mindestens einen PSE bereitgestellt wird und unabhängig 50 bis 99 % des i_{TSC}-Stroms an der mindestens einen OEE bereitgestellt wird und/oder
(D) wobei nachts 80 bis 1000 % des i_{TSC}-Stroms an der mindestens einen HSE bereitgestellt wird und unabhängig ein Strom i_{HE} von der HEE an der HSE bereitgestellt wird und unabhängig 75 bis 100 % des i_{TSC}-Stroms an der mindestens einen PSE bereitgestellt wird.

12. Verfahren nach einem der Ansprüche 8 bis 11, wobei Ströme während einer ersten Zeitdauer eingeschaltet werden und während einer zweiten Zeitdauer ausgeschaltet werden.

13. Batterie, das elektrochemische Speichersystem nach einem der Ansprüche 1 bis 7 mit einer Steuervorrichtung zum Regulieren einer Leistungsverteilung umfassend.

14. Chemische Erzeugungseinheit, mindestens ein elektrochemisches Wasserstoff-Speichersystem nach einem der Ansprüche 1 bis 7 umfassend, wobei Wasserstoff oder Sauerstoff von dem System geliefert wird.

15. Chemische Erzeugungseinheit nach Anspruch 14, mindestens eine einer Biogaserzeugungseinheit, einer Zementerzeugungseinheit, einer Ammoniakerzeugungseinheit, einer Harnstofferzeugungseinheit und einer Synthesegaserzeugungseinheit umfassend.

## Revendications

1. Système de stockage électrochimique comprenant
un réseau à cellules multiples avec [2,n] cellules connectées électriquement en série,
chaque cellule comprenant
une membrane, un premier compartiment cellulaire et un second compartiment cellulaire, et des électrolytes,
au moins une électrode de stockage d'ions hydroxyle (HSE) avec au moins une électrode d'évolution de l'hydrogène (HEE) adjointe formant ensemble une électrode négative,
au moins une électrode d'évolution de l'oxygène (EEO) formant une électrode positive,
au moins une première connexion électrique à l'électrode positive et au moins une quatrième connexion électrique à l'électrode négative,
dans lequel la quatrième connexion électrique du côté de la cellule est divisée en une cinquième connexion électrique à l'au moins une HSE et une sixième connexion électrique à l'au moins une HEE,
dans lequel l'électrode négative de la cellule m est en connexion électrique avec l'électrode positive de la cellule m+1,
dans lequel des courants d'évolution de l'hydrogène (i_{HE}) entre HSEᵢ et HEEᵢ (i∈[1,n]) sont commandés indépendamment avec au moins un dispositif de commande,
dans lequel des connexions électriques fournissent une électrode à déclenchements multiples, et
dans lequel l'au moins une première connexion électrique de la première cellule est conçue pour être connectée électriquement à une première borne d'une source/d'un collecteur de courant continu externe et dans lequel l'au moins une quatrième connexion électrique de la dernière (n^{ième}) cellule est conçue pour être connectée électriquement à une seconde borne de la source/du collecteur de courant continu.

2. Système de stockage d'hydrogène électrochimique selon la revendication 1, dans lequel l'électrode positive comprend au moins une électrode de stockage de protons (PSE) adjointe, et dans lequel la première connexion électrique du côté de la cellule est divisée en une deuxième connexion électrique à l'au moins une PSE et une troisième connexion électrique à l'au moins une OEE, et dans lequel des courants d'évolution de l'oxygène (i_{OE}) entre PSEᵢ et OEEᵢ (i∈[1,n]) sont commandés de manière indépendante avec l'au moins un dispositif de commande.

3. Système de stockage d'hydrogène électrochimique selon la revendication 2, dans lequel le dispositif de commande est un dispositif de commande c.c./c.a. avec un rapport de courant i_{c.a}./i_{c.c}. commandable individuellement lors de l'utilisation, dans lequel le courant continu est fourni du côté électrode du dispositif de commande ; dans lequel le dispositif de commande a au moins un courant alternatif pour commander des courants d'évolution de l'oxygène (i_{OE}) et indépendamment au moins un courant alternatif pour commander des courants d'évolution de l'hydrogène (i_{HE}), de préférence un courant alternatif pour commander tous les courants d'évolution de l'oxygène (i_{OE}) et un courant alternatif pour commander des courants d'évolution de l'hydrogène (i_{HE}) ; dans lequel le dispositif de commande comprend un transformateur.

4. Système de stockage d'hydrogène électrochimique selon l'une quelconque des revendications 1 à 3, dans lequel les électrodes HSE, HEE, PSE optionnelle et OEE sont chacune indépendamment choisies parmi Ni, Fe, Cd, Co, W, Mo, Pt, Ru, Ir, C, et des combinaisons de ceux-ci ; dans lequel nE[3-1000] ; le système de stockage d'hydrogène électrochimique comprenant k multiréseaux de cellules en parallèle, dans lequel kE[2-250].

5. Système de stockage d'hydrogène électrochimique selon l'une quelconque des revendications 1 à 4, comprenant par cellule chacune individuellement 2 à 100 électrodes de stockage d'hydroxyle (HSE) avec chacune individuellement 2 à 100 électrodes d'évolution de l'hydrogène (HEE) adjointes formant ensemble une électrode négative, et chacune individuellement 2 à 100 électrodes de stockage de protons (PSE) adjointes avec chacune individuellement 2 à 100 électrodes d'évolution de l'oxygène (OEE) adjointes formant une électrode positive,
dans lequel, de préférence, au moins un nombre de HEE est égal à un nombre de courants d'évolution de l'hydrogène, un nombre d'OEE est égal à un nombre de courants d'évolution de l'oxygène, un nombre de HSE est égal à un nombre de courants HSE bidirectionnels commandables plus 1, et un nombre de PSE est égal à un nombre de courants PSE bidirectionnels commandables plus 1.

6. Système de stockage électrochimique d'hydrogène selon l'une quelconque des revendications 1 à 5, dans lequel au moins une électrode HSE est adjacente à au moins une électrode HEE, de préférence dans lequel toutes les électrodes HSE sont adjacentes à au moins une électrode HEE, et/ou dans lequel au moins une électrode PSE optionnelle est adjacente à au moins une électrode OEE, de préférence dans lequel toutes les électrodes PSE optionnelles sont adjacentes à au moins une électrode OEE ; dans lequel l'au moins une électrode HSE et l'au moins une électrode HEE forment un réseau d'électrodes, et/ou dans lequel l'au moins une électrode PSE et l'au moins une électrode OEE forment un réseau d'électrodes ; dans lequel des électrolytes sont choisis parmi OH- et H₂ pour le côté HEE, de préférence à une concentration de 0,1 à 12 moles/l, et parmi OH⁻/O₂ pour le côté OEE, de préférence à une concentration de 0,1 à 12 moles/l ; dans lequel des électrolytes sont dissous dans de l'eau, de préférence de l'eau désionisée, de préférence avec une conductivité de < 0,5 mS ; le système de stockage d'hydrogène électrochimique comprenant en liaison fluidique avec le système de stockage au moins l'un parmi une unité de recharge et un système de stockage.

7. Système de stockage électrochimique d'hydrogène selon l'une quelconque des revendications 1 à 6, comprenant au moins un capteur de niveau de liquide.

8. Procédé de fonctionnement d'un système de stockage électrochimique d'hydrogène selon l'une quelconque des revendications 1 à 7, comprenant la charge du système pendant la journée par un courant de système total i_{TSC} et la décharge du système pendant la nuit.

9. Procédé de fonctionnement selon la revendication 8, dans lequel une fraction de la puissance disponible pour la charge est utilisée pour le stockage de l'hydrogène.

10. Procédé selon l'une quelconque des revendications 8 à 9, comprenant
la charge pendant la journée d'au moins une cellule en fournissant une partie d'un courant i_{TSC} à au moins une HSE et à travers une cellule à au moins une PSE, et en fournissant une électrolyse pendant la journée en fournissant une partie d'un courant i_{TSC} à au moins une HEE et à travers une cellule à au moins une OEE,
la décharge d'au moins une cellule pendant la nuit en fournissant un courant i_{TSC} à au moins une PSE et à travers une cellule à au moins une HSE et en fournissant une électrolyse dans une cellule par un courant provenant d'au moins une OEE à au moins une PSE et une électrolyse dans une cellule par un courant provenant d'au moins une HEE à au moins une HSE.

11. Procédé selon les revendications 8 à 10,
(A) dans lequel, dans au moins une cellule, de préférence dans toutes les cellules, pendant la journée 75 à 100 % du courant i_{TSC} sont fournis à l'au moins une HSE, et indépendamment 75 à 100 % du courant i_{TSC} sont fournis à l'au moins une PSE, et/ou
dans lequel, pendant la nuit, 75 à 100 % du courant i_{TSC} sont fournis à au moins une HSE, et indépendamment 75 à 100 % du courant i_{TSC} sont fournis à l'au moins une PSE, ou
(B) dans lequel, dans au moins une cellule, de préférence dans toutes les cellules, pendant la journée, 75 à 100 % du courant i_{TSC} sont fournis à l'au moins une HEE, et indépendamment 75 à 100 % du courant i_{TSC} sont fournis à l'au moins une OEE, et/ou
dans lequel, pendant la nuit, aucun courant i_{TSC} n'est fourni et l'électrolyse est réalisée en fournissant un courant à partir de l'OEE à la PSE et de la HEE à la HSE, ou
(C) dans lequel, dans au moins une cellule, de préférence dans toutes les cellules, pendant la journée, 15 à 90 % du courant i_{TSC} sont fournis à l'au moins une HSE, et indépendamment 10 à 85 % du courant i_{TSC} sont fournis à l'au moins une HEE, et indépendamment 1 à 50 % du courant i_{TSC} sont fournis à l'au moins une PSE, et indépendamment 50 à 99 % du courant i_{TSC} sont fournis à l'au moins une OEE, et/ou
(D) dans lequel, pendant la nuit, 80 à 1000 % du courant i_{TSC} sont fournis à l'au moins une HSE, et indépendamment un courant i_{HE} est fourni à partir de la HEE à la HSE, et indépendamment 75 à 100 % du courant i_{TSC} sont fournis à l'au moins une PSE.

12. Procédé selon l'une quelconque des revendications 8 à 11, dans lequel des courants sont activés pendant un premier laps de temps et sont désactivés pendant un second laps de temps.

13. Batterie comprenant le système de stockage électrochimique selon l'une quelconque des revendications 1 à 7, équipé d'un dispositif de commande pour réguler la distribution de courant.

14. Unité de production chimique comprenant au moins un système de stockage d'hydrogène électrochimique selon l'une quelconque des revendications 1 à 7, dans lequel l'hydrogène ou l'oxygène est fourni par le système.

15. Unité de production chimique selon la revendication 14, comprenant au moins une parmi une unité de production de biogaz, une unité de production de ciment, une unité de production d'ammoniaque, une unité de production d'urée, et une unité de production de gaz de synthèse.
